# EUROPÄISCHE PATENTANMELDUNG

(11) **EP 3 820 167 A1**
(43) Veröffentlichungstag der Anmeldung: **12.05.2021**
(21) Anmeldenummer: 20200529.4
(22) Anmeldetag: 07.10.2020
(51) Int. Cl.: H04R 25/00

(54) **VERFAHREN ZUM BETRIEB EINES NETZWERKS SOWIE HÖRGERÄT**

(30) Priorität: 11.11.2019 DE 102019217400
(71) Anmelder: Sivantos Pte. Ltd., Singapore 539775 (SG)
(72) Erfinder: GÖKAY, Umut, 53639 Königswinter (DE); NAUMANN, Frank, 91088 Bubenreuth (DE)
(74) Vertreter: FDST Patentanwälte

(57) **Zusammenfassung**

Es wird ein Verfahren angegeben zum Betrieb eines Netzwerks (12), mit mehreren Hörgeräten (2), welche unterschiedlichen Nutzern (N) zugeordnet sind, wobei jedes der Hörgeräte (2) eine Schnittstelle (14) aufweist, zum Datenaustausch mit den übrigen Hörgeräten (2), wobei das Netzwerk (12) als ein Ringnetz ausgebildet ist, innerhalb welchem ein jeweiliges Hörgerät (2) lediglich mit zwei anderen Hörgeräten (2) direkt verbunden ist und mit den übrigen Hörgeräten (2) lediglich mittelbar, sodass der Datenaustausch innerhalb des Netzwerks (12) der Reihe nach von Hörgerät (2) zu Hörgerät (2) erfolgt. Weiter wird ein entsprechendes Hörgerät (2) angegeben.

## Beschreibung

Die Erfindung betrifft ein Verfahren zum Betrieb eines Netzwerks, mit mehreren Hörgeräten, sowie ein entsprechendes Hörgerät.

Ein Hörgerät ist üblicherweise einem einzelnen Nutzer zugeordnet und wird von diesem im oder am Ohr getragen, um Schall aus der Umgebung aufzunehmen und modifiziert wieder auszugeben. Hierzu weist das Hörgerät ein Mikrofon auf, welches Schall aufnimmt und ein elektrisches Eingangssignal erzeugt. Dieses wird zur Modifikation einer Signalverarbeitung des Hörgeräts zugeführt. Die Signalverarbeitung gibt als Ergebnis ein elektrisches Ausgangssignal aus, welches dann über einen Hörer des Hörgeräts wieder in Schall umgewandelt wird.

Treffen mehrere Nutzer mit jeweils einem Hörgerät an einem Ort zusammen, ist es unter Umständen sinnvoll, dass die Hörgeräte sich in einem Netzwerk miteinander verbinden, um Daten auszutauschen. Hörgeräte unterschiedlicher Nutzer, welche gemeinsam in einem Netzwerk verbunden sind, sind beispielsweise beschrieben in EP 1 643 801 A2 und EP 3 101 919 A1.

Zum Datenaustausch in einem Netzwerk weist ein Hörgerät eine Schnittstelle auf, deren Betrieb jedoch typischerweise sehr energieintensiv ist. Dies ist besonders bei Hörgeräten problematisch, welche mobile Geräte sind und somit nicht an eine feste Stromversorgung angeschlossen sind, sondern mittels eines im Hörgerät installierten Energiespeichers mit Energie versorgt werden. Häufig ist auch die Leistungsfähigkeit, z.B. Bandbreite, der Schnittstelle begrenzt, sodass ein Datenaustausch mit zunehmender Anzahl an Verbindungen schwierig ist.

Vor diesem Hintergrund ist es eine Aufgabe der Erfindung, die Vernetzung von Hörgeräten miteinander in einem gemeinsamen Netzwerk zu verbessern. Die Vernetzung und der Betrieb des Netzwerks sollen möglichst effizient sein, sodass der Datenaustausch insbesondere möglichst fehlerfrei, schnell und energiearm erfolgt.

Die Aufgabe wird erfindungsgemäß gelöst durch ein Verfahren mit den Merkmalen gemäß Anspruch 1 sowie durch ein Hörgerät mit den Merkmalen gemäß Anspruch 14. Vorteilhafte Ausgestaltungen, Weiterbildungen und Varianten sind Gegenstand der Unteransprüche. Dabei gelten die Ausführungen im Zusammenhang mit dem Verfahren sinngemäß auch für das Hörgerät und umgekehrt. Sofern nachfolgend Verfahrensschritte beschrieben werden, ergeben sich vorteilhafte Ausgestaltungen für das Hörgerät insbesondere dadurch, dass dieses ausgebildet ist, einen oder mehrere dieser Verfahrensschritte auszuführen.

Das Verfahren dient zum Betrieb eines Netzwerks, mit mehreren Hörgeräten, welche unterschiedlichen Nutzern zugeordnet sind. Das Netzwerk weist also mehrere Hörgeräte auf, welche jeweils ein Teilnehmer des Netzwerks sind und in diesem zum Datenaustausch miteinander verbunden sind. Jedes der Hörgeräte weist eine Schnittstelle auf, zum Datenaustausch mit den übrigen Hörgeräten. Die Schnittstelle wird auch als Kommunikationsschnittstelle bezeichnet. Die Schnittstelle ist vorzugsweise eine Drahtlosschnittstelle, sodass zwischen den Hörgeräten dann Funkverbindungen ausgebildet sind. Die Schnittstelle ist geeigneterweise eine WLAN-, RF- oder Bluetooth-Antenne.

Vorliegend ist das Netzwerk als ein Ringnetz ausgebildet, innerhalb welchem ein jeweiliges Hörgerät lediglich mit zwei anderen Hörgeräten direkt verbunden ist und mit den übrigen Hörgeräten lediglich mittelbar, sodass der Datenaustausch innerhalb des Netzwerks der Reihe nach von Hörgerät zu Hörgerät erfolgt. Ein jeweiliges Hörgerät ist demnach nicht direkt mit jedem anderen Hörgerät verbunden, vielmehr ist jedes Hörgerät nur mit zwei anderen Hörgeräten derart verbunden, sodass alle Hörgeräte zumindest mittelbar in einer ringähnlichen Sende- und Empfangsanordnung miteinander verbunden sind. Das bedeutet jedoch nicht, dass die Hörgeräte physisch, d.h. räumlich in einem Ring angeordnet sind, der Begriff "ringförmig" bezieht sich vorrangig auf den Datenaustausch. Besteht keinerlei mittelbare oder unmittelbare Verbindung zwischen zwei Hörgeräten, so sind diese nicht Teilnehmer desselben Netzwerks.

Das Ringnetz zeichnet sich durch eine besonders geringe Anzahl an Verbindungen aus, welche derart gebildet sind, dass die Hörgeräte des Netzwerks nacheinander in einer Reihe verbunden sind. In einem einzelnen Ringnetz mit beispielsweise n Hörgeräten weist jedes Hörgerät lediglich zwei Verbindungen zu anderen Hörgeräten auf, sodass dann in dem Netzwerk insgesamt n Verbindungen gebildet sind. Durch die Reduzierung der Anzahl an Verbindungen werden auch die Datenmenge und die benötigte Bandbreite für den Datenaustausch im Netzwerk vorteilhaft reduziert, sodass sich eine verbesserte Übertragungsqualität ergibt. Die Daten laufen bildlich gesprochen ringförmig durch das Netzwerk und dabei von einem Hörgerät zum jeweils nächsten Hörgerät.

Zur Verbindung mit einem anderen Netzwerk ist vorteilhafterweise eines der Hörgeräte als ein Gateway konfiguriert, zum gesammelten Datenaustausch mit dem anderen Netzwerk. Das andere Netzwerk ist z.B. ebenfalls ein Ringnetz mit Hörgeräten oder das Internet oder ein WLAN. Das Gateway ist somit einerseits im Ringnetz mit zwei anderen Hörgeräten verbunden und andererseits mit einem weiteren Hörgerät oder einem andersartigen Gerät außerhalb des Ringnetzes. Das Gateway sendet die Daten einerseits zum nachfolgenden Hörgerät im Ringnetz und andererseits je nach Bedarf auch zu einem anderen Netzwerk. Dasjenige Hörgerät, welches als Gateway konfiguriert ist, führt demnach zusätzlich zu einer regulären Hörgerätefunktion noch eine Zusatzfunktion aus, nämlich eine Schnittstellenfunktion zwischen zwei Netzwerken. Ein Gateway zeichnet sich insbesondere dadurch aus, dass dieses den Datenaustausch eines Netzwerks und somit mehrerer Hörgeräte bündelt und gesammelt an ein anderes Netzwerk sendet, vorzugsweise an ein entsprechendes Gateway des anderen Netzwerks. Sofern in dem anderen Netzwerk ein oder mehrere Hörgeräte vorhanden sind, sind diese mit den übrigen Hörgeräten des Ringnetzes dann lediglich mittelbar über das jeweilige Gateway verbunden. Insbesondere steht einem Gateway in einem Netzwerk ein anderes Gateway in einem anderen Netzwerk gegenüber, sodass die beiden Gateways den Datenaustausch zwischen den beiden Netzwerken steuern, vorzugsweise den kompletten Datenaustausch.

Beim Datenaustausch werden zwischen den Hörgeräten Daten ausgetauscht. Diese Daten sind beispielsweise Audiodaten, Einstellungsdaten oder andere Daten oder eine Kombination hiervon. Beim Datenaustausch wird auch eine bestimmte Datenmenge übertragen, deren Größe maßgeblich die Übertragungsqualität der Verbindungen beeinflusst. Da nämlich die verfügbare Bandbreite für den Datenaustausch üblicherweise begrenzt ist, führt eine zu große Datenmenge zu entsprechenden Übertragungsverlusten und -fehlern. Durch die Ausgestaltung als Ringnetz wird jedoch die Datenmenge, welche von einem einzelnen Hörgerät gesendet und empfangen wird vorteilhaft deutlich reduziert.

Im Ringnetz ist grundsätzlich ein Datenaustausch in zwei Richtungen möglich, nämlich ausgehend von einem Hörgerät an je eines der beiden Hörgeräte, mit welchen das Hörgerät verbunden ist. Vorteilhaft sind sowohl ein Datenaustausch in lediglich einer Richtung als auch ein Datenaustausch in beiden Richtungen. Ein Datenaustausch in beiden Richtungen erfolgt z.B. bei binauralen Hörgeräten mit zwei Einzelgeräten derart, dass jedes Einzelgerät eines Hörgeräts in unterschiedlicher Richtung Daten mit anderen Hörgeräten austauscht.

Die Erfindung geht insbesondere von der Erkenntnis aus, dass eine direkte Verbindung zweier Hörgeräte nach Art einer peer-to-peer Verbindung, d.h. ohne ein vermittelndes Zusatzgerät, besonders vorteilhaft ist. Eine solche peer-to-peer-Verbindung ermöglicht auf einfache Weise einen Datenaustausch. Bei mehreren Hörgeräten wäre beispielsweise jedes Hörgerät einfach mit jedem anderen Hörgerät verbunden, sodass sich eine entsprechend hohe Anzahl an direkten Verbindungen ergibt. Das resultierende Netzwerk ist dann ein vollständiges peer-to-peer-Netzwerk, in welchem jeder Teilnehmer mit jedem anderen Teilnehmer verbunden ist. Entsprechend steigen die zu übertragende Datenmenge sowie auch der Bedarf an Energie und Bandbreite einer einzelnen Schnittstelle.

Ein Kerngedanke der Erfindung besteht nun insbesondere darin, die Vernetzung von Hörgeräten zu vereinfachen, indem die Anzahl an Verbindungen zwischen den Hörgeräten reduziert werden, sodass nicht jedes Hörgerät mit jedem anderen Hörgerät verbunden wird. Die Vernetzung von Hörgeräten wird derart gestaltet, dass diese nicht lediglich einfach paarweise direkt miteinander zum Datenaustausch verbunden sind, sondern dass auch lediglich mittelbare Verbindungen möglich sind, bei welchen ein drittes Hörgerät Daten zwischen zwei anderen Hörgeräten lediglich durchreicht. Solche mittelbaren Verbindungen werden durch die Konfiguration des Netzwerks als Ringnetz hergestellt und dann genutzt, um die Anzahl der Verbindungen und auch die benötigte Bandbreite zu reduzieren. Vorteilhafterweise werden dadurch zusätzlich auch Entfernungen überbrückt, welche größer sind als die Reichweite der Schnittstelle eines Hörgeräts. Insgesamt wird damit insbesondere auch der Energiebedarf eines jeweiligen Hörgeräts reduziert.

In einer bevorzugten Ausgestaltung sind je zwei Hörgeräte nach Art einer peer-to-peer-Verbindung unmittelbar, d.h. direkt miteinander verbunden. Darunter ist nicht zu verstehen, dass jedes Hörgerät mit jedem anderen vorhandenen Hörgerät unmittelbar verbunden ist, sondern dass sofern zwei Hörgeräte im Rahmen des Ringnetzes direkt miteinander verbunden sind, die zugehörige Verbindung eine unmittelbare Verbindung ist. Demnach wird auf ein Zusatzgerät, z.B. ein Relais oder einen Router, zur Vermittlung verzichtet. Die Daten werden zwischen zwei unmittelbar verbundenen Hörgeräten direkt von der einen Schnittstelle zur anderen Schnittstelle übermittelt.

In einer geeigneten Ausgestaltung erfolgt der Datenaustausch im Netzwerk über einen Ringbus, auf welchen Daten eines jeweiligen Hörgeräts aufmischbar sind und auf welchem Daten der Reihe nach an ein jeweiliges Hörgerät gesendet werden. Mit anderen Worten: im Ringnetz ist ein Ringbus ausgebildet, auf weichen von jedem der Hörgeräte dessen jeweilige Daten - sofern vorhanden - geschrieben werden und von welchem diese Daten dann von anderen Hörgeräten gelesen werden. Die Daten werden entlang des Ringbus nach und nach von einem Hörgerät an das nächste Hörgerät weitergereicht. Insbesondere erreichen die Daten schließlich wieder dasjenige Hörgerät, welches die Daten ursprünglich ausgesendet hat. Dieses Hörgerät führt dann beispielsweise eine Fehlerprüfung oder Fehlerkorrektur durch, sendet die Daten beispielsweise erneut. Zweckmäßigerweise werden die Daten bei Erreichen des Hörgeräts, welches die Daten ursprünglich ausgesendet hat, vom Ringbus gelöscht, um die Datenmenge zu reduzieren.

Bevorzugterweise weist das Netzwerk für jedes der Hörgeräte einen eigenen Ringkanal auf, auf welchem Daten des Hörgeräts an die übrigen Hörgeräte gesendet werden. Dadurch sind insbesondere mehrere parallele Ringkanäle ausgebildet, auf weichen jeweils eines der Hörgeräte Daten sendet und die übrigen Hörgeräte diese Daten empfangen. Der Ringbus ist somit auf mehrere nebeneinander verlaufende Ringkanäle aufgeteilt. Jeder Ringkanal ist genau einem der Hörgeräte zugeordnet und transportiert auch nur Daten dieses einen Hörgeräts. Somit ist für ein jeweiliges Hörgerät die Zuordnung der Daten zu einem der übrigen Hörgeräte vorteilhaft eindeutig.

Zweckmäßigerweise wird das Netzwerk automatisch aufgebaut, sobald sich mehrere Hörgeräte in räumlicher Nähe zueinander befinden. Dadurch ist sichergestellt, dass auch nur solche Hörgeräte zu Teilnehmern des Netzwerks werden, dessen Nutzer sich auch potentiell unterhalten möchten. Die Verbindungen zwischen den Hörgeräten werden dabei insbesondere vorausschauend aufgebaut, ohne dass bereits ein Datenaustausch erfolgen muss. Somit ist gewährleistet, dass bei entsprechendem Bedarf das Netzwerk bereits existiert und nicht erst noch aufgebaut werden muss, was üblicherweise zu einer entsprechenden Zeitverzögerung führen würde. Unter "sich in räumlicher Nähe zueinander befinden" wird insbesondere verstanden, dass ein räumlicher Abstand zwischen zwei Hörgeräten einen Mindestabstand nicht überschreitet. Der Mindestabstand beträgt beispielsweise zwischen 1 m und 10 m. Insbesondere entspricht der Mindestabstand einer maximalen Reichweite der Schnittstelle eines jeweiligen Hörgeräts.

In einer vorteilhaften Ausgestaltung sendet ein jeweiliges Hörgerät beim Datenaustausch Audiodaten, welche mittels eines Mikrofons des Hörgeräts aufgenommen werden. Mit anderen Worten: über das Netzwerk werden zwischen den Hörgeräten Audiodaten ausgetauscht, welche von diesen Hörgeräten jeweils mittels eines Mikrofons erzeugt werden. Durch das beschriebene Senden von Audiodaten ist sozusagen eine Funkübertragung realisiert, durch welche störende Hintergrundgeräusche reduziert oder gänzlich ausgeblendet werden. Der Schall eines Nutzers muss nicht über eine Luftverbindung einen anderen Nutzer erreichen, sondern die direkte Übertragung von Schall wird ersetzt durch eine Funkübertragung von Audiodaten, welche aus dem Schall erzeugt wurden. Die Audiodaten sind elektrische Signale. Das Mikrofon nimmt Schall aus der Umgebung auf und wandelt diesen in Audiodaten um. Die Audiodaten werden vorzugsweise ohnehin von einem Hörgerät erzeugt, um diese mittels einer Signalverarbeitung des Hörgeräts zu modifizieren und über einen Hörer des Hörgeräts an dessen Nutzer wieder als Schall auszugeben.

Bevorzugterweise sind ein oder mehrere oder alle Hörgeräte im Netzwerk Hörgeräte zur Versorgung eines hörgeschädigten Nutzers. Die Audiodaten werden dann in der Signalverarbeitung derart insbesondere anhand eines individuellen Audiogramms modifiziert, dass ein Hördefizit des zugeordneten Nutzers ausgeglichen wird. Die Audiodaten, welche über das Netzwerk gesendet werden, werden jedoch zweckmäßigerweise nicht von der Signalverarbeitung desselben Hörgeräts modifiziert, zumindest nicht um ein Hördefizit auszugleichen, da das Hördefizit individuell ist und daher die zugehörige Modifikation typischerweise individuell angepasst ist, für andere Nutzer also nicht unbedingt passend ist. Die Audiodaten, welche von einem Hörgerät erzeugt werden, werden demnach einerseits über das Ringnetz an die übrigen Hörgeräte gesendet und andererseits in der Signalverarbeitung modifiziert und ausgegeben. Die Audiodaten, welche ein erstes Hörgerät von einem zweiten Hörgerät über das Ringnetz empfängt, werden zweckmäßigerweise in der Signalverarbeitung des ersten Hörgeräts modifiziert und somit gegebenenfalls an ein individuelles Hördefizit des Nutzers des ersten Hörgeräts angepasst. Dabei werden beispielsweise die Audiodaten des zweiten Hörgeräts mit den Audiodaten des ersten Hörgeräts gemeinsam in die Signalverarbeitung geführt und dort gemeinsam modifiziert.

In einer bevorzugten Ausgestaltung nimmt das Mikrofon als Audiodaten die eigene Stimme des Nutzers des jeweiligen Hörgeräts auf und dieses sendet lediglich dann Audiodaten, wenn der Nutzer des Hörgeräts selbst spricht. Mit anderen Worten: das Senden von Audiodaten ist auf Zeiträume eigener Sprechaktivität begrenzt. Die Audiodaten umfassen somit vorrangig die eigene Stimme des Nutzers eines jeweiligen Hörgeräts. Dadurch werden lediglich dann Audiodaten übertragen, wenn auch tatsächlich relevante Daten vorliegen und insgesamt wird die Datenmenge, welche im Netzwerk übertragen wird, vorteilhaft reduziert.

Die Audiodaten sind entweder echte oder synthetische Audiodaten. Echte Audiodaten sind beispielsweise einfach ein elektrisches Ausgangssignal des Mikrofons. Synthetische Audiodaten unterscheiden sich von echten Audiodaten insbesondere dadurch, dass im Hörgerät vor dem Senden eine zusätzliche Verarbeitung erfolgt, welche vorteilhaft zu einer Datenreduktion führt. Bei der Verarbeitung werden die Audiodaten in einer vorteilhaften Ausgestaltung mittels einer Verarbeitungseinheit in Audiodaten, d.h. synthetische Audiodaten, für einen Synthesizer umgewandelt, welcher ausgebildet ist, anhand dieser synthetischen Audiodaten echte Audiodaten zu erzeugen. Während echte Audiodaten von einem anderen Hörgerät nach dem Empfangen direkt ausgebbar sind, müssen synthetische Audiodaten demnach zuvor zusätzlich verarbeitet werden, beispielsweise mit einem Synthesizer, welcher in eine Steuereinheit des Hörgeräts integriert ist und dann echte Audiodaten erzeugt. Somit ergibt sich eine vorteilhafte Ausgestaltung dadurch, dass die Audiodaten synthetische Audiodaten sind, für einen Synthesizer eines jeweiligen Hörgeräts.

Geeigneterweise wird ermittelt, ob der Nutzer selbst spricht, indem überprüft wird, ob ein Eingangspegel des Mikrofons einen Schwellwert überschreitet. Da das Hörgerät und somit auch das Mikrofon vom Nutzer am Kopf getragen werden macht die eigene Stimme einen nicht vernachlässigbaren Anteil am gesamten Schall aus, welcher das Mikrofon erreicht. Dieser Anteil ist in einer zweckmäßigen Ausgestaltung dadurch erhöht, dass das Mikrofon ein Richtmikrofon ist, auch als direktionales Mikrofon bezeichnet, welches in Richtung des Mundes des Nutzers ausgerichtet ist, also vorrangig von dort Schall aufnimmt. Ob der Eingangspegel den Schwellwert überschreitet wird dadurch überprüft, dass der Eingangspegel gemessen wird und mit dem Schwellwert verglichen wird. Ohne tatsächlich die eigene Stimme zu erkennen wird dann angenommen, dass ein hoher Eingangspegel eine eigene Sprechaktivität kennzeichnet. Somit ist auf einfache und hinreichend zuverlässige Weise das Senden von Audiodaten zumindest überwiegend auf Zeiträume eigener Sprechaktivität begrenzt.

Alternativ oder zusätzlich zur Messung des Eingangspegels wird in einer geeigneten Ausgestaltung mittels einer Eigenstimmendetektion des jeweiligen Hörgeräts ermittelt, ob der Nutzer selbst spricht. Die Eigenstimmendetektion zeichnet sich insbesondere dadurch aus, dass sichergestellt wird, dass auch tatsächlich die eigene Stimme des Nutzers erkannt wird. Die Eigenstimmendetektion ist beispielsweise schaltungstechnisch oder programmtechnisch in einer Steuereinheit des Hörgeräts realisiert. Beispielsweise wird von der Eigenstimmendetektion ein Richtmikrofon des Hörgeräts in Richtung des Mundes des Nutzers ausgerichtet, um vorrangig dessen Stimme aufzunehmen. Ebenfalls geeignet ist eine Ausgestaltung, bei welcher ein Mikrofon des Hörgeräts im Gehörgang des Nutzers platziert ist, sodass dieses Mikrofon vorrangig die eigene Stimme des Nutzers erfasst.

Alternativ oder zusätzlich zu Audiodaten sendet ein jeweiliges Hörgerät in einer vorteilhaften Ausgestaltung beim Datenaustausch Einstellungsdaten, zur Einstellung eines oder mehrerer Betriebsparameter eines Hörgeräts. Die Einstellungsdaten werden auch als Konfigurationsdaten bezeichnet, da mittels dieser ein jeweiliges Hörgerät konfigurierbar ist und insbesondere auch konfiguriert wird. Beispielhafte Betriebsparameter sind Lautstärke, Filtercharakteristika, Schwellwerte, Breite oder Richtung eines Richtmikrofons und dergleichen. Die Einstellungsdaten sind beispielsweise konkrete Werte für eine oder mehrere Betriebsparameter oder Umgebungsdaten, welche die aktuelle Umgebung beschreiben und aus welchen ein Hörgerät dann geeignete Werte für Betriebsparameter ableitet. Dies ist besonders vorteilhaft in einer Situation, in welcher ein Hörgerät neu dem Netzwerk beitritt und sich dann durch Empfang der Einstellungsdaten besonders einfach und schnell automatisch selbst optimal für die aktuelle Umgebung einstellt ohne zunächst selbst die Einstellungsdaten ermitteln zu müssen.

Sofern beim Datenaustausch Audiodaten übermittelt werden, wird diesen in einer zweckmäßigen Ausgestaltung zusätzlich ein Hintergrundgeräusch beigemischt. Dem liegt die Überlegung zugrunde, dass die Audiodaten bei der Ausgabe möglicherweise unnatürlich klingen, beispielsweise wenn diese mit einem Mikrofon im Gehörgang eines Nutzers aufgenommen wurden oder mit einem Synthesizer erzeugt worden sind. Durch das Beimischen eines Hintergrundgeräuschs wird dann ein natürlicherer Klang erzielt.

Wie das Hintergrundgeräusch konkret beigemischt wird, ist zunächst nicht relevant. In einer besonders vorteilhaften Ausgestaltung wird jedoch das Hintergrundgeräusch von einem der Hörgeräte beigemischt, welches hierzu als ein Master des Netzwerks konfiguriert ist, sodass alle Hörgeräte dasselbe Hintergrundgeräusch empfangen und insbesondere auch ausgeben. Sofern mehrere Ringkanäle vorhanden sind, wird das Hintergrundgeräusch entweder auf einen oder mehrere der Ringkanäle aufgemischt, z.B. lediglich auf den Ringkanal des Masters, oder das Ringnetz weist einen zusätzlichen Hintergrundkanal auf, auf welchem das Hintergrundgeräusch zusätzlichen parallel zu den Ringkanälen übertragen wird. Das Hintergrundgeräusch ist beispielsweise ein Rauschen. Das Hintergrundgeräusch wird vom Master beispielsweise künstlich erzeugt, aus der Umgebung aufgenommen oder ist in einem Speicher des Masters als eine Audiodatei hinterlegt und wird abgerufen.

Auch unabhängig von der Beimischung des Hintergrundgeräuschs wird allgemein in dem Netzwerk zweckmäßigerweise einem der Hörgeräte die Rolle eines Masters zugewiesen, welcher insbesondere den Ein- und Austritt von Hörgeräten in das oder aus dem Netzwerk koordiniert. Allen übrigen Hörgeräten wird dagegen jeweils die Rolle eines Slaves zugewiesen, welcher von einer Steuerung des Netzwerks durch den Master abhängig ist. Diese Rollenverteilung wird insbesondere vorgenommen, sobald wenigstens zwei Hörgeräte zusammenfinden. Beispielsweise sendet ein jeweiliges Hörgerät regelmäßig ein Suchsignal aus, welches von einem anderen Hörgerät empfangen und bestätigt wird, sodass bei gegenseitigem Empfang und Bestätigung zwei Hörgeräte voneinander Kenntnis erlangen und dann spontan und insbesondere automatisch ein Netzwerk bilden. Analoges gilt beim Beitritt eines Hörgeräts zu einem bestehenden Netzwerk.

Sofern eines der Hörgeräte als Gateway wie oben beschrieben konfiguriert wird, wird hierzu vorzugsweise dasjenige Hörgerät verwendet, welches bereits der Master ist.

Ein geeignetes Hörgerät ist ausgebildet zur Durchführung eines Verfahrens wie zuvor beschrieben. Hierzu weist das Hörgerät zweckmäßigerweise eine Steuereinheit auf, welche derart ausgebildet ist, dass diese das entsprechende Verfahren ausführt. In der Steuereinheit ist das Verfahren insbesondere programmtechnisch oder schaltungstechnisch realisiert oder eine Kombination hiervon. Beispielswiese ist die Steuereinheit hierfür als ein Mikroprozessor oder als ein ASIC ausgebildet oder als eine Kombination hiervon. Die hier genannte Steuereinheit ist vorzugsweise dieselbe Steuereinheit wie die weiter oben bereits genannte Steuereinheit.

Ein jeweiliges Hörgerät ist vorzugsweise ein monaurales oder ein binaurales Hörgerät. Ein binaurales Hörgerät weist zwei Einzelgeräte auf, welche vom Nutzer auf unterschiedlichen Seiten getragen werden, also jeweils im oder am linken und rechten Ohr. Ein monaurales Hörgerät weist lediglich ein Einzelgerät auf, welches vom Nutzer am oder im linken oder rechten Ohr getragen wird.

Nachfolgend werden Ausführungsbeispiele der Erfindung anhand einer Zeichnung näher erläutert. Darin zeigen jeweils schematisch:
- Fig. 1: ein Hörgerät,
- Fig. 2: ein Netzwerk,
- Fig. 3: eine Variante des Netzwerks aus Fig. 2,
- Fig. 4: eine weitere Variante des Netzwerks aus Fig. 2,
- Fig. 5: eine Variante des Hörgeräts aus Fig. 1,
- Fig. 6: eine weitere Variante des Hörgeräts aus Fig. 1.

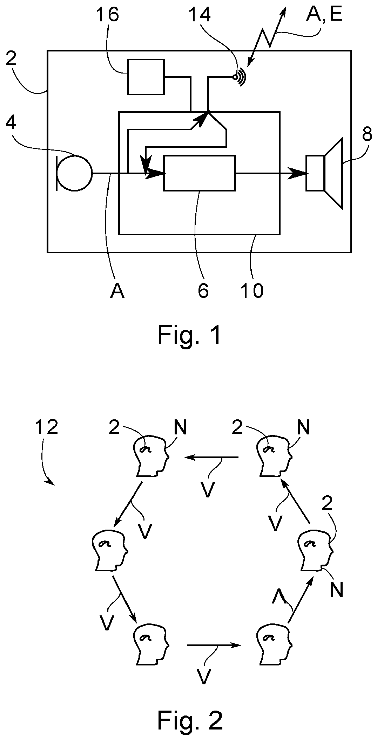

In Fig. 1 ist ein beispielhaftes Hörgerät 2 gezeigt, welches hier speziell zur Versorgung eines in Fig. 1 nicht explizit gezeigten, hörgeschädigten Nutzers N dient. Hierzu weist das Hörgerät 2 ein Mikrofon 4 auf, welches Schall aus der Umgebung aufnimmt und ein elektrisches Eingangssignal erzeugt, d.h. Audiodaten A, A' (nachfolgend ohne Beschränkung der Allgemeinheit lediglich mit "A" bezeichnet). Diese Audiodaten A werden zur Modifikation einer Signalverarbeitung 6 des Hörgeräts 2 zugeführt. Die Modifikation erfolgt vorliegend anhand eines individuellen Audiogramms des Nutzers N, welcher dem Hörgerät 2 zugeordnet ist, sodass ein individuelles Hördefizit des Nutzers N ausgeglichen wird. Die Signalverarbeitung 6 gibt als Ergebnis ein elektrisches Ausgangssignal aus, welches dann über einen Hörer 8 des Hörgeräts 2 wieder in Schall umgewandelt wird und an den Nutzer N ausgegeben wird. Die Signalverarbeitung 6 ist im gezeigten Ausführungsbeispiel ein Teil einer Steuereinheit 10 des Hörgeräts 2.

Das Hörgerät 2 nimmt zudem als ein Teilnehmer an einem Netzwerk 12 teil, zum Datenaustausch mit anderen Hörgeräten 2, welche anderen Nutzern N zugeordnet sind. Ein beispielhaftes Netzwerk 12 ist in Fig. 2 gezeigt. Die Anzahl der Teilnehmer kann im Betrieb dynamisch variieren, indem neue Hörgeräte 2 in dem Netzwerk 12 beitreten oder indem teilnehmende Hörgeräte 2 das Netzwerk 12 verlassen. Jedes der Hörgeräte 2 weist eine Schnittstelle 14 auf, zum Datenaustausch mit den übrigen Hörgeräten 2. Die beispielhaft gezeigten Netzwerke 12 sind drahtlose Netzwerke 12, die Schnittstellen 14 entsprechend Drahtlosschnittstellen, z.B. WLAN-, Bluetooth- oder RF-Antennen. Außerdem weist ein jeweiliges Hörgerät 2 noch einen Energiespeicher 16 auf.

Ein jeweiliges Hörgerät 2 ist vorliegend ein monaurales oder ein binaurales Hörgerät 2. Eine Kombination unterschiedlicher Hörgeräte 2 im gleichen Netzwerk 12 ist grundsätzlich möglich.

Das Netzwerk 12 ist als ein Ringnetz ausgebildet, innerhalb welchem ein jeweiliges Hörgerät 2 lediglich - wie in Fig. 2 erkennbar ist - mit zwei anderen Hörgeräten 2 direkt verbunden ist und mit den übrigen Hörgeräten 2 lediglich mittelbar, sodass im Rahmen eines Verfahrens zum Betrieb des Netzwerks 12 der Datenaustausch innerhalb des Netzwerks 12 der Reihe nach von Hörgerät 2 zu Hörgerät 2 erfolgt. Ein jeweiliges Hörgerät 2 ist demnach nicht direkt mit jedem anderen Hörgerät 2 verbunden, vielmehr ist jedes Hörgerät 2 nur mit zwei anderen Hörgeräten 2 derart verbunden, sodass alle Hörgeräte 2 zumindest mittelbar in einer ringähnlichen Sende- und Empfangsanordnung miteinander verbunden sind. Das bedeutet jedoch nicht, dass die Hörgeräte 2 physisch, d.h. räumlich in einem Ring angeordnet sind, der Begriff "ringförmig" bezieht sich vorrangig auf den Datenaustausch.

Das Ringnetz zeichnet sich durch eine besonders geringe Anzahl an Verbindungen V aus, welche derart gebildet sind, dass die Hörgeräte 2 des Netzwerks 12 nacheinander in einer Reihe verbunden sind. In dem in Fig. 2 gezeigten Ringnetz mit beispielsweise sechs Hörgeräten 2 weist jedes Hörgerät 2 lediglich zwei Verbindungen V zu anderen Hörgeräten 2 auf, sodass dann in dem Netzwerk 12 insgesamt sechs Verbindungen V gebildet sind. Durch die Reduzierung der Anzahl an Verbindungen V werden die Datenmenge und die benötigte Bandbreite für den Datenaustausch im Netzwerk 12 reduziert. Die Daten laufen bildlich gesprochen ringförmig durch das Netzwerk 12 und dabei von einem Hörgerät 2 zum jeweils nächsten Hörgerät 2.

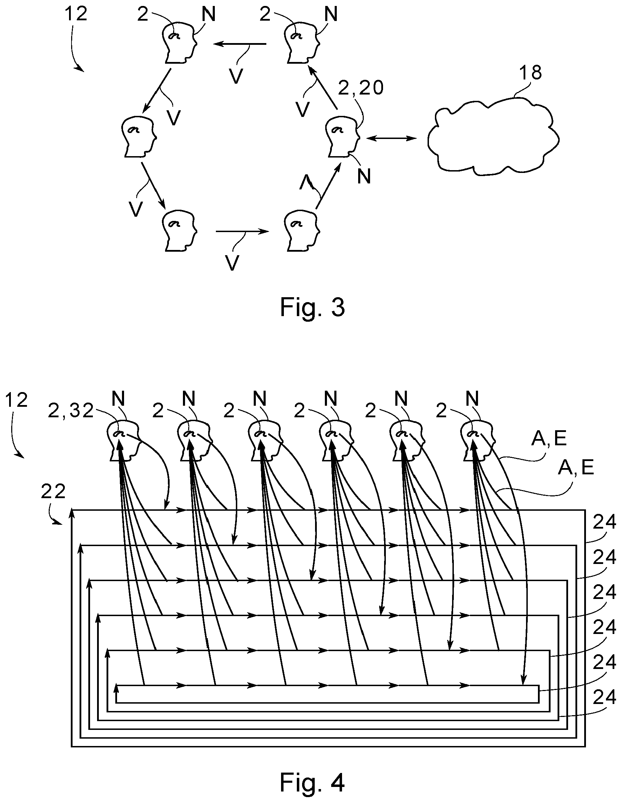

Zur Verbindung mit einem anderen Netzwerk 18 ist beispielsweise wie in Fig. 3 gezeigt eines der Hörgeräte 2 des Netzwerks 12 als ein Gateway 20 konfiguriert, zum gesammelten Datenaustausch mit dem anderen Netzwerk 18. Das andere Netzwerk 18 ist z.B. ebenfalls ein Ringnetz mit Hörgeräten 2 oder das Internet oder ein WLAN. Das Gateway 20 ist somit einerseits im Ringnetz mit zwei anderen Hörgeräten 2 verbunden und andererseits mit einem in Fig. 3 nicht explizit gezeigten weiteren Hörgerät 2 oder andersartigen Gerät außerhalb des Ringnetzes.

Beim Datenaustausch werden zwischen den Hörgeräten 2 Daten ausgetauscht. Diese Daten sind beispielsweise Audiodaten A, Einstellungsdaten E oder andere Daten oder eine Kombination hiervon. In Fig. 1 ist beispielhaft die Übertragung von Audiodaten A und Einstellungsdaten E mittels der Schnittstelle 14 gezeigt. Beim Datenaustausch wird auch eine bestimmte Datenmenge übertragen, deren Größe maßgeblich die Übertragungsqualität der Verbindungen V beeinflusst. Durch die Ausgestaltung als Ringnetz wird die Datenmenge, welche von einem einzelnen Hörgerät 2 gesendet und empfangen wird deutlich reduziert.

Im Ringnetz ist grundsätzlich ein Datenaustausch in zwei Richtungen möglich, nämlich ausgehend von einem Hörgerät 2 an je eines der beiden Hörgeräte 2, mit welchen das Hörgerät 2 verbunden ist. Möglich sind sowohl ein Datenaustausch in lediglich einer Richtung als auch ein Datenaustausch in beiden Richtungen. In den Fig. 2 und 3 erfolgt ein Datenaustausch beispielhaft in lediglich einer Richtung, nämlich linksherum. Möglich ist auch ein Datenaustausch in beiden Richtungen, d.h. links- und rechtsherum. Ein Datenaustausch in beiden Richtungen erfolgt z.B. in einer nicht explizit gezeigten Ausgestaltung bei binauralen Hörgeräten 2 mit zwei Einzelgeräten derart, dass jedes Einzelgerät eines Hörgeräts 2 in unterschiedlicher Richtung Daten mit anderen Hörgeräten 2 austauscht.

Die Vernetzung von Hörgeräten 2 ist in den gezeigten Ausführungsbeispielen derart gestaltet, dass die Hörgeräte 2 nicht lediglich einfach paarweise direkt miteinander zum Datenaustausch verbunden sind, sondern dass auch lediglich mittelbare Verbindungen möglich sind, bei welchen ein drittes Hörgerät Daten zwischen zwei anderen Hörgeräten 2 lediglich durchreicht. Solche mittelbaren Verbindungen werden durch die Konfiguration des Netzwerks 12 als Ringnetz hergestellt und dann genutzt, um die Anzahl der Verbindungen V und auch die benötigte Bandbreite zu reduzieren. Dadurch sind auch Entfernungen überbrückbar, welche größer sind als die Reichweite der Schnittstelle 14 eines Hörgeräts 2.

Vorliegend sind je zwei Hörgeräte 2 nach Art einer peer-to-peer-Verbindung unmittelbar, d.h. direkt miteinander verbunden. Darunter ist nicht zu verstehen, dass jedes Hörgerät 2 mit jedem anderen vorhandenen Hörgerät 2 unmittelbar verbunden ist, sondern dass sofern zwei Hörgeräte 2 im Rahmen des Ringnetzes direkt miteinander verbunden sind, die zugehörige Verbindung V eine unmittelbare Verbindung ist, wie in den Fig. 2 und 3 erkennbar ist. Demnach wird auf ein Zusatzgerät, z.B. ein Relais oder einen Router, zur Vermittlung verzichtet. Die Daten werden zwischen zwei unmittelbar verbundenen Hörgeräten 2 direkt von der einen Schnittstelle 14 zur anderen Schnittstelle 14 übermittelt.

Zudem erfolgt vorliegend der Datenaustausch im Netzwerk 12 über einen Ringbus 22, für welchen ein Ausführungsbeispiel in Fig. 4 gezeigt ist. Auf den Ringbus 22 sind Daten eines jeweiligen Hörgeräts 2 aufmischbar. Konkret werden in Fig. 4 von jedem Hörgerät 2 sowohl Audiodaten A als auch Einstellungsdaten E als Daten auf den Ringbus 22 gelegt und dann von den anderen Hörgeräten 2 gelesen. Die Daten werden dann auf dem Ringbus 22 der Reihe nach an ein jeweiliges Hörgerät 2 gesendet. Die Daten werden entlang des Ringbus 22 nach und nach von einem Hörgerät 2 an das nächste Hörgerät 2 weitergereicht. Insbesondere erreichen die Daten schließlich wieder dasjenige Hörgerät 2, welches die Daten ursprünglich ausgesendet hat.

Das Netzwerk 12 weist in Fig. 4 für jedes der Hörgeräte 2 einen eigenen Ringkanal 24 auf, auf welchem Daten des Hörgeräts 2 an die übrigen Hörgeräte 2 gesendet werden. Dadurch sind mehrere parallele Ringkanäle 24 ausgebildet, auf welchen jeweils eines der Hörgeräte 2 Daten sendet und die übrigen Hörgeräte 2 diese Daten empfangen. Beispielweise legt das erste Hörgerät 2 ganz links in Fig. 4 Audiodaten A und Einstellungsdaten E auf den äußersten Ringkanal 24 des Ringbus 22. Diese Audiodaten A und Einstellungsdaten E werden vom letzten Hörgerät 2 ganz rechts in Fig. 4 gelesen. Zugleich schreibt dieses letzte Hörgerät 2 ebenfalls Audiodaten A und Einstellungsdaten E auf den Ringbus, allerdings auf seinen eigenen Ringkanal 24, welcher in Fig. 4 der innerste Ringkanal 24 ist. Der Ringbus 22 ist somit auf mehrere nebeneinander verlaufende Ringkanäle 24 aufgeteilt. Jeder Ringkanal 24 ist genau einem der Hörgeräte 2 zugeordnet und transportiert auch nur Daten dieses einen Hörgeräts 2. Somit ist für ein jeweiliges Hörgerät 2 die Zuordnung der Daten zu einem der übrigen Hörgeräte 2 eindeutig.

Das Netzwerk 12 wird automatisch aufgebaut, sobald sich mehrere Hörgeräte 2 in räumlicher Nähe zueinander befinden, wodurch sichergestellt ist, dass auch nur solche Hörgeräte 2 zu Teilnehmern des Netzwerks 12 werden, dessen Nutzer N sich auch potentiell unterhalten möchten.

In den gezeigten Ausführungsbeispielen sendet ein jeweiliges Hörgerät 2 beim Datenaustausch Audiodaten A, welche mittels eines Mikrofons 4 aufgenommen werden. Durch das beschriebene Senden von Audiodaten A ist eine Funkübertragung realisiert, durch welche störende Hintergrundgeräusche reduziert oder gänzlich ausgeblendet werden. Das Mikrofon 4 nimmt Schall aus der Umgebung auf und wandelt diesen wie in Fig. 1 erkennbar ist in Audiodaten A um. Die Audiodaten A werden in Fig. 1 ohnehin von dem Hörgerät 2 erzeugt, um diese mittels der Signalverarbeitung 6 zu modifizieren und über den Hörer 8 an den Nutzer N wieder als Schall auszugeben.

Da das Hörgerät 2 in Fig. 1 ein Hörgerät 2 zur Versorgung eines hörgeschädigten Nutzers N ist, werden die Audiodaten A in der Signalverarbeitung 6 derart modifiziert, dass ein Hördefizit des Nutzers N ausgeglichen wird. Die Audiodaten A, welche über das Netzwerk 12 gesendet werden, werden jedoch nicht von der Signalverarbeitung 6 desselben Hörgeräts 2 modifiziert, zumindest nicht um ein Hördefizit auszugleichen, da das Hördefizit individuell ist. Die Audiodaten A, welche von einem Hörgerät 2 erzeugt werden, werden demnach einerseits über das Ringnetz an die übrigen Hörgeräte 2 gesendet und andererseits in der Signalverarbeitung 6 modifiziert und ausgegeben. Die Audiodaten A, welche ein erstes Hörgerät 2 von einem zweiten Hörgerät 2 über das Ringnetz empfängt, werden aber in der Signalverarbeitung 6 des ersten Hörgeräts 2 modifiziert und somit gegebenenfalls an ein individuelles Hördefizit des Nutzers N des ersten Hörgeräts 2 angepasst. Dabei werden beispielsweise die Audiodaten A des zweiten Hörgeräts 2 mit den Audiodaten A des ersten Hörgeräts 2 gemeinsam in die Signalverarbeitung 6 geführt und dort gemeinsam modifiziert. Dies ist in Fig. 1 angedeutet durch die beiden gegenläufigen Pfeile von der Schnittstelle 14 zu Signalpfad zwischen Mikrofon 4 und Signalverarbeitung 6. Die eigenen Audiodaten A werden einerseits zur Schnittstelle 14 geleitet und mittels dieser gesendet sowie andererseits zur Signalverarbeitung 6. Zusätzlich werden Audiodaten A mittels der Schnittstelle 14 empfangen und mit den Audiodaten A, welche vom Mikrofon 4 stammen, gemischt und gemeinsam mit diesen zur Signalverarbeitung 6 geführt und dort modifiziert. Analog wird mit den Einstellungsdaten E verfahren, wobei diese von der Steuereinheit 10 bereitgestellt und verarbeitet werden, z.B. um die Signalverarbeitung 6 einzustellen.

Optional nimmt das Mikrofon 4 als Audiodaten A die eigene Stimme des Nutzers N des jeweiligen Hörgeräts 2 auf und sendet lediglich dann Audiodaten A, wenn der Nutzer N des Hörgeräts 2 selbst spricht. Mit anderen Worten: das Senden von Audiodaten A ist auf Zeiträume eigener Sprechaktivität begrenzt.

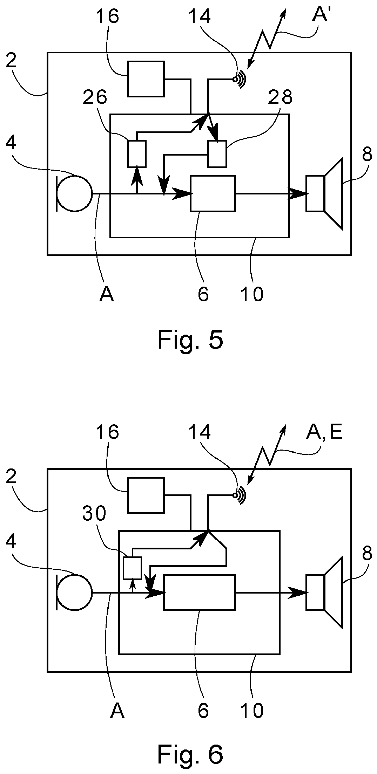

Die Audiodaten A sind entweder echte oder synthetische Audiodaten A. Echte Audiodaten A sind beispielsweise einfach ein elektrisches Ausgangssignal des Mikrofons 4. Synthetische Audiodaten A unterscheiden sich von echten Audiodaten A insbesondere dadurch, dass im Hörgerät 2 vor dem Senden eine zusätzliche Verarbeitung erfolgt, welche vorteilhaft zu einer Datenreduktion führt. Bei der Verarbeitung werden die Audiodaten A beispielsweise wie in der in Fig. 5 gezeigten Ausgestaltung mittels einer Verarbeitungseinheit 26 in Audiodaten A' für einen Synthesizer 28 umgewandelt, welcher ausgebildet ist, anhand dieser synthetischen Audiodaten A' echte Audiodaten A zu erzeugen. Während echte Audiodaten A von einem anderen Hörgerät 2 nach dem Empfangen direkt ausgebbar sind, müssen synthetische Audiodaten A' demnach zuvor zusätzlich verarbeitet werden, hier mit dem Synthesizer 26, welcher in die Steuereinheit 10 des Hörgeräts 2 integriert ist und dann echte Audiodaten A erzeugt.

In einer nicht explizit gezeigten Ausgestaltung wird ermittelt, ob der Nutzer N selbst spricht, indem überprüft wird, ob ein Eingangspegel des Mikrofons 4 einen Schwellwert überschreitet. Da das Hörgerät 2 und somit auch das Mikrofon 4 vom Nutzer N am Kopf getragen werden macht die eigene Stimme einen nicht vernachlässigbaren Anteil am gesamten Schall aus, welcher das Mikrofon 4 erreicht. Alternativ oder zusätzlich hierzu wird z.B. wie in Fig. 6 gezeigt mittels einer Eigenstimmendetektion 30 des jeweiligen Hörgeräts 2 ermittelt, ob der Nutzer N selbst spricht. Die Eigenstimmendetektion 30 ist hier schaltungstechnisch oder programmtechnisch in der Steuereinheit 10 des Hörgeräts 2 realisiert.

Alternativ oder zusätzlich zu Audiodaten A sendet ein jeweiliges Hörgerät 2 wie beschrieben beim Datenaustausch Einstellungsdaten E, zur Einstellung eines oder mehrerer Betriebsparameter eines Hörgeräts 2. Das Senden und Empfangen von Audiodaten A ist grundsätzlich unabhängig vom Senden und Empfangen von Einstellungsdaten E. Beispielhafte Betriebsparameter sind Lautstärke, Filtercharakteristika, Schwellwerte, Breite oder Richtung eines Richtmikrofons und dergleichen. Die Einstellungsdaten E sind beispielsweise konkrete Werte für eine oder mehrere Betriebsparameter oder Umgebungsdaten, welche die aktuelle Umgebung beschreiben und aus welchen ein Hörgerät 2 dann geeignete Werte für Betriebsparameter ableitet.

Sofern beim Datenaustausch Audiodaten A übermittelt werden, wird diesen in einer möglichen Ausgestaltung zusätzlich ein Hintergrundgeräusch beigemischt. Beispielsweise wird das Hintergrundgeräusch von einem der Hörgeräte 2 beigemischt, welches hierzu als ein Master 32 des Netzwerks 12 konfiguriert ist, sodass alle Hörgeräte 2 dasselbe Hintergrundgeräusch empfangen und insbesondere auch ausgeben. Zur Illustration ist lediglich beispielhaft im Ausführungsbeispiel der Fig. 4 das erste Hörgerät 2 ganz links zusätzlich als Master 32 konfiguriert und mischt das Hintergrundgeräusch auf dessen Ringkanal 24 auf. In einer nicht gezeigten Variante weist das Ringnetz einen zusätzlichen Hintergrundkanal auf, auf welchem das Hintergrundgeräusch zusätzlichen parallel zu den Ringkanälen 24 übertragen wird. Das Hintergrundgeräusch ist beispielsweise ein Rauschen. Das Hintergrundgeräusch wird vom Master 32 beispielsweise künstlich erzeugt, aus der Umgebung aufgenommen oder ist in einem Speicher des Masters 32 als eine Audiodatei hinterlegt und wird abgerufen.

Die einzelnen Konzepte, welche jeweils im Zusammenhang mit den einzelnen Figuren beschrieben worden sind, sind grundsätzlich unabhängig voneinander und beliebig miteinander kombinierbar. Insofern ergeben sich weitere Ausführungsbeispiele durch Kombination einzelner Aspekte der gezeigten Ausführungsbeispiele.

### Bezugszeichenliste

- 2: Hörgerät
- 4: Mikrofon
- 6: Signalverarbeitung
- 8: Hörer
- 10: Steuereinheit
- 12: Netzwerk
- 14: Schnittstelle
- 16: Energiespeicher
- 18: anderes Netzwerk
- 20: Gateway
- 22: Ringbus
- 24: Ringkanal
- 26: Verarbeitungseinheit
- 28: Synthesizer
- 30: Eigenstimmendetektion
- 32: Master
- A, A': Audiodaten
- E: Einstellungsdaten
- N: Nutzer

## Patentansprüche

1. Verfahren zum Betrieb eines Netzwerks (12), mit mehreren Hörgeräten (2), welche unterschiedlichen Nutzern (N) zugeordnet sind,
- wobei jedes der Hörgeräte (2) eine Schnittstelle (14) aufweist, zum Datenaustausch mit den übrigen Hörgeräten (2),
- wobei das Netzwerk (12) als ein Ringnetz ausgebildet ist, innerhalb welchem ein jeweiliges Hörgerät (2) lediglich mit zwei anderen Hörgeräten (2) direkt verbunden ist und mit den übrigen Hörgeräten (2) lediglich mittelbar, sodass der Datenaustausch innerhalb des Netzwerks (12) der Reihe nach von Hörgerät (2) zu Hörgerät (2) erfolgt.

2. Verfahren nach Anspruch 1,
wobei je zwei Hörgeräte (2) nach Art einer peer-to-peer-Verbindung unmittelbar miteinander verbunden sind.

3. Verfahren nach Anspruch 1 oder 2,
wobei der Datenaustausch im Netzwerk (12) über einen Ringbus (22) erfolgt, auf welchen Daten (A, A', E) eines jeweiligen Hörgeräts (2) aufmischbar sind und auf welchem Daten (A, A', E) der Reihe nach an ein jeweiliges Hörgerät (2) gesendet werden.

4. Verfahren nach einem der Ansprüche 1 bis 3,
wobei das Netzwerk (12) für jedes der Hörgeräte (2) einen eigenen Ringkanal (24) aufweist, auf welchem Daten (A, A', E) des Hörgeräts (2) an die übrigen Hörgeräte (2) gesendet werden.

5. Verfahren nach einem der Ansprüche 1 bis 4,
wobei das Netzwerk (12) automatisch aufgebaut wird, sobald sich mehrere Hörgeräte (2) in räumlicher Nähe zueinander befinden.

6. Verfahren nach einem der Ansprüche 1 bis 5,
wobei ein jeweiliges Hörgerät (2) beim Datenaustausch Audiodaten (A, A') sendet, welche mittels eines Mikrofons (4) des Hörgeräts (2) aufgenommen werden.

7. Verfahren nach Anspruch 6,
wobei das Mikrofon (4) als Audiodaten (A) die eigene Stimme des Nutzers (N) des jeweiligen Hörgeräts (2) aufnimmt und dieses Hörgerät (2) lediglich dann Audiodaten (A, A') sendet, wenn der Nutzer (N) des Hörgeräts (2) selbst spricht.

8. Verfahren nach einem der Ansprüche 6 oder 7,
wobei die Audiodaten synthetische Audiodaten (A') sind, für einen Synthesizer (28) eines jeweiligen Hörgeräts (2).

9. Verfahren nach Anspruch 6 bis 8,
wobei ermittelt wird, ob der Nutzer (N) selbst spricht, indem überprüft wird, ob ein Eingangspegel des Mikrofons (4) einen Schwellwert überschreitet.

10. Verfahren nach einem der Ansprüche 6 bis 9,
wobei mittels einer Eigenstimmendetektion (30) des jeweiligen Hörgeräts (2) ermittelt wird, ob der Nutzer (N) selbst spricht.

11. Verfahren nach einem der Ansprüche 1 bis 10,
wobei ein jeweiliges Hörgerät (2) beim Datenaustausch Einstellungsdaten (E) sendet, zur Einstellung eines oder mehrerer Betriebsparameter eines Hörgeräts (2).

12. Verfahren nach einem der Ansprüche 1 bis 11,
wobei beim Datenaustausch Audiodaten (A, A') übermittelt werden, welchen zusätzlich ein Hintergrundgeräusch beigemischt wird.

13. Verfahren nach Anspruch 12,
wobei das Hintergrundgeräusch von einem der Hörgeräte (2) beigemischt wird, welches hierzu als ein Master (32) des Netzwerks (12) konfiguriert ist, sodass alle Hörgeräte (2) dasselbe Hintergrundgeräusch empfangen.

14. Hörgerät (2), welches ausgebildet ist zur Durchführung eines Verfahrens gemäß einem der Ansprüche 1 bis 13.
